# EUROPÄISCHE PATENTSCHRIFT

(11) **EP 2 781 811 B1**
(45) Veröffentlichungstag und Bekanntmachung des Hinweises auf die Patenterteilung: **06.05.2015**
(21) Anmeldenummer: 13001430.1
(22) Anmeldetag: 20.03.2013
(51) Int. Cl.: F16K 27/00

(54) **Ventileinrichtung**
Valve device
Dispositif d'aération

(43) Veröffentlichungstag der Anmeldung: 24.09.2014
(73) Patentinhaber: FESTO AG & Co. KG, 73734 Esslingen (DE)
(72) Erfinder: Göller, Thomas, D-70191 Stuttgart (DE)
(74) Vertreter: Patentanwälte Magenbauer & Kollegen Partnerschaft mbB

(56) Entgegenhaltungen:
- WO-A1-2009/095038
- DE-A1-102008 005 834
- US-A1- 2003 226 993
- US-A1- 2005 236 053

## Beschreibung

Die Erfindung betrifft eine Ventileinrichtung, mit einer ein Ventilgehäuse aufweisenden, elektrisch betätigbaren Ventileinheit, die zur manuellen Betätigung mit einer Handhilfsbetätigungseinrichtung ausgestattet ist, die einen beweglich in dem Ventilgehäuse angeordneten Betätigungsstößel aufweist, der über einen von außerhalb des Ventilgehäuses zugänglichen Betätigungsendabschnitt verfügt und der zum einen im Rahmen einer Tastbetätigung durch tastende Beaufschlagung des Betätigungsendabschnittes im Rahmen einer Hubbewegung zwischen einer unbetätigten Grundstellung und einer betätigten Arbeitsstellung linear verschiebbar ist und zum anderen im Rahmen einer Drehbetätigung durch Verdrehen des Betätigungsendabschnittes in der Arbeitsstellung lösbar verriegelbar ist, und mit einer unter Einnahme einer Betriebsstellung in einer den Betätigungsendabschnitt zumindest partiell abdeckenden Weise außen an der Ventileinheit befestigten oder befestigbaren Zusatz-Betätigungseinheit, die ein dem Betätigungsendabschnitt axial vorgelagertes Drückelement aufweist, das drückend betätigbar ist, um durch Übertragung einer Drückkraft die Tastbetätigung des Betätigungsendabschnittes hervorzurufen.

Eine aus der DE 10 2008 005 834 A1 bekannte Ventileinrichtung dieser Art verfügt über eine mit einem elektrisch betätigbaren Vorsteuerventil ausgestattete Ventileinheit, die eine Handhilfsbetätigungseinrichtung aufweist, mit der alternativ zu einer elektrischen Betätigung eine manuelle Betätigung vorgenommen werden kann. Die Handhilfsbetätigungseinrichtung weist einen Betätigungsstößel auf, der mit dem Vorsteuerventilglied der Ventileinheit kooperieren kann und durch Einwirkung auf einen Betätigungsendabschnitt betätigt werden kann, wobei grundsätzlich zwei Betätigungsmöglichkeiten gegeben sind, zum einen eine Tastbetätigung und zum anderen eine Drehbetätigung. Bei einer Tastbetätigung wird der Betätigungsstößel so lange in einer auf das Vorsteuerventilglied einwirkenden Arbeitsstellung gehalten, wie er an seinem Betätigungsendabschnitt eine drückende Beaufschlagung erfährt. Bei Wegnahme der Drückkraft kehrt der Betätigungsstößel aufgrund einer rückstellend wirkenden Federeinrichtung in die Grundstellung zurück. Soll das Vorsteuerventil für längere Zeit ohne elektrische Unterstützung aktiviert bleiben, lässt sich der Betätigungsstößel in der Arbeitsstellung durch Drehbetätigung des Betätigungsendabschnittes zeitweilig lösbar verriegeln.

Da der Betätigungsendabschnitt zur Vermeidung ungewollter Betätigungen normalerweise so ausgebildet ist, dass er ungeachtet der momentanen Stellung des Betätigungsstößels versenkt im Ventilgehäuse untergebracht ist, leidet bei am Einsatzort der Ventileinrichtung bestehenden ungünstigen Platzverhältnissen die Zugänglichkeit, was insbesondere eine Verriegelung der Arbeitsstellung erschwert oder gar unmöglich macht.

Bei der aus der oben erwähnten DE 10 2008 005 834 A1 bekannten Ventileinrichtung ist der Handhilfsbetätigungseinrichtung eine Zusatz-Betätigungseinheit zugeordnet, die bei Bedarf außen am Ventilgehäuse im Bereich des Betätigungsendabschnittes der Handhilfsbetätigungseinrichtung montiert werden kann. Diese Zusatz-Betätigungseinheit verfügt über ein dem Betätigungsendabschnitt außen vorgelagertes Drückelement, das im Rahmen eines Tastvorganges drückend beaufschlagbar ist, um die Tastbetätigung des Betätigungsstößels der Handhilfsbetätigungseinrichtung hervorzurufen. Damit wird zwar die Tastbetätigung des Betätigungsstößels begünstigt, eine Verriegelung in der Arbeitsstellung ist jedoch nicht möglich und soll sogar bewusst verhindert werden. Die bekannte Zusatz-Betätigungseinheit fungiert als Sicherheitsabdeckung, die den Zweck hat, ausschließlich eine Tastbetätigung zu erlauben und eine Verriegelung der Arbeitsstellung des Betätigungsstößels zu verhindern.

Aus der EP 2 479 465 A1 ist eine mit einer Handhilfsbetätigungseinrichtung ausgestattete Ventileinrichtung bekannt, bei der außen an einer Ventileinheit im Bereich der Handhilfsbetätigungseinrichtung ein Abdeckelement in verschiedenen Stellungen montierbar ist, um unterschiedliche Betätigungsmöglichkeiten für die Handhilfsbetätigungseinrichtung vorzugeben. Das Abdeckelement selbst wird nicht als Betätigungselement genutzt.

Aus der WO 2009/095038 A1 ist eine Ventileinrichtung bekannt, die eine mit einem Betätigungsstößel ausgestattete Handhilfsbetätigungseinrichtung aufweist, wobei der Betätigungsstößel unmittelbar mit einem schieberartigen Betätigungsglied zusammenwirkt. Ein Verdrehen des Betätigungsstößels zwecks Verriegelung in einer Arbeitsstellung ist hier nicht möglich. Eine Ventileinrichtung ähnlichen Aufbaus offenbart die DE 10 2008 011 661 B3, wobei ein dort zur manuellen Betätigung dienendes Handbetätigungsglied die zusätzliche Aufgabe hat, im betätigten Zustand der Handhilfsbetätigungseinrichtung eine Demontage der zugeordneten Ventileinheit zu verhindern.

Die DE 10 2010 048 611 A1 beschreibt ein elektrisch betätigbares Ventil, das mit einer Handhilfsbetätigungseinrichtung ausgestattet ist, die über einen durch manuelle Beaufschlagung linear verschiebbaren Betätigungsstößel verfügt.

Der Erfindung liegt die Aufgabe zugrunde, bei einer Ventileinrichtung der eingangs genannten Art auch unter ungünstigen Platzverhältnissen eine uneingeschränkte Handhabung der Handhilfsbetätigungseinrichtung zu gewährleisten.

Zur Lösung dieser Aufgabe ist in Verbindung mit den eingangs genannten Merkmalen vorgesehen, dass die Zusatz-Betätigungseinheit einen antriebsmäßig mit dem Drückelement zusammenwirkenden Betätigungsschieber aufweist, der zum Hervorrufen der Drückbetätigung des Drückelementes quer zur Hubrichtung des Betätigungsstößels manuell verschiebbar ist, wobei er wahlweise jeweils stabil in einer das Drückelement nicht betätigenden unwirksamen Stellung oder in einer das Drückelement betätigenden wirksamen Stellung positionierbar ist.

Mithin kann der Betätigungsstößel auch bei eingeschränkter Zugänglichkeit seines Betätigungsendabschnittes wahlweise rein tastend oder auch vorübergehend verriegelnd betätigt werden. Die außen an die Ventileinheit angebrachte Zusatz-Betätigungseinheit hat einen für manuelle Betätigung gut zugänglichen Betätigungsschieber, der entweder kurzzeitig hin und her verschoben werden kann, um die Tastbetätigung des Betätigungsstößels hervorzurufen oder der auch so lange wie gewünscht in der wirksamen Stellung belassen werden kann, in der er den Betätigungsstößel in vergleichbarer Weise in der Arbeitsstellung hält als wenn der Betätigungsstößel durch Verdrehen des Betätigungsendabschnittes verriegelt wäre. Die Zusatz-Betätigungseinheit kann als Nachrüstprodukt zur Verfügung gestellt werden, das bei Bedarf unter Einnahme der Betriebsstellung an einer Ventileinheit montierbar ist, um auch bei schwer zugänglichem Betätigungsendabschnitt eine uneingeschränkte Betätigungsfunktionalität der Handhilfsbetätigungseinrichtung zur Verfügung stellen zu können. Dadurch, dass der Betätigungsschieber quer zur Hubrichtung des Betätigungsstößels verschiebbar ist, nimmt er wenig Platz in Anspruch und kann eine mit der Zusatz-Betätigungseinheit ausgestattete Ventileinrichtung sehr kompakte Abmessungen aufweisen.

Vorteilhafte Weiterbildungen der Erfindung gehen aus den Unteransprüchen hervor.

Das Ventilgehäuse der Ventileinheit verfügt zweckmäßigerweise über einen den Betätigungsendabschnitt des Betätigungsstößels koaxial umschließenden Ringvorsprung, der bezüglich benachbarten Bereichen des Ventilgehäuses vorsteht und der sich besonders gut dafür eignet, die Zusatz-Betätigungseinheit in der Betriebsstellung daran zu fixieren.

Zweckmäßigerweise enthält die Zusatz-Betätigungseinheit einen Grundkörper, der einerseits das Drückelement trägt und an dem andererseits der Betätigungsschieber verschiebbar gelagert ist. Unter Vermittlung des Grundkörpers ist die Zusatz-Betätigungseinheit zudem bei Einnahme der Betriebsstellung an der Ventileinheit befestigt.

Besonders empfehlenswert ist eine Rastbefestigung der Zusatz-Betätigungseinheit am Ventilgehäuse mit Hilfe zueinander komplementärer Rastverbindungsmittel, die an der Ventileinheit und am Grundkörper der Zusatz-Betätigungseinheit angeordnet sind. Je nachdem, ob eine Ventileinheit nur vorübergehend oder dauerhaft mit der Zusatz-Betätigungseinheit ausgestattet werden soll, können die Rastverbindungsmittel zur Ermöglichung einer lösbaren oder zur Vornahme einer unlösbaren Rastbefestigung ausgebildet sein.

Das Drückelement ist an dem Grundkörper zweckmäßigerweise federnd aufgehängt. Zweckmäßigerweise nimmt es in der unwirksamen Stellung des Betätigungsschiebers eine nicht vorgespannte Neutralstellung ein, aus der es zwecks Verlagerung des Betätigungsendabschnittes ausgelenkt wird, wenn der Betätigungsschieber in die wirksame Stellung verschoben wird.

Durch die federnde Aufhängung lässt sich gewährleiten, dass das Drückelement in seine Ausgangsstellung zurückkehrt, wenn der Betätigungsschieber in die unwirksame Stellung zurückverlagert wird.

Die Zusatz-Betätigungseinheit kann auch so ausgebildet sein, dass das federnd aufgehängte Drückelement schon in der unwirksamen Stellung des Betätigungsschiebers durch den Betätigungsschieber beaufschlagt und eventuell auch zumindest geringfügig vorgespannt ist.

Als besonders vorteilhaft erweist sich eine federnde Aufhängung des Drückelementes mittels eines sich quer zur Hubrichtung des Betätigungsstößels erstreckenden, federelastisch auslenkbaren Tragarmes. Bei einer solchen Anordnung kann für das Drückelement auf engem Raum ein relativ großer Auslenkhub zur Verfügung gestellt werden, was eine sichere drückende Betätigung des Betätigungsstößels gewährleistet.

Vorzugsweise ist das Drückelement an einem Endabschnitt des Tragarmes angeordnet. Für den Tragarm empfiehlt sich eine band- oder streifenförmige Flachgestalt. Der Tragarm ist an dem Grundkörper fixiert.

Vorzugsweise enthält die Zusatz-Betätigungseinheit eine einteilige und insbesondere einstückige Grundeinheit, in der das Drückelement, der Tragarm und der Grundkörper zusammengefasst sind. Die Grundeinheit ist zweckmäßigerweise ein einstückiges, bevorzugt durch Spritzgießen hergestelltes Kunststoffteil.

Zweckmäßigerweise ist sowohl am Betätigungsschieber als auch am Drückelement mindestens eine Schrägfläche ausgebildet, die gemeinsam eine Schrägflächenanordnung bilden, unter deren Mitwirkung die genannten Komponenten antriebsmäßig zusammenwirken. Wird der Betätigungsschieber zum Umschalten zwischen der unwirksamen und der wirksamen Stellung verschoben, gleiten die Schrägflächen aneinander ab, um je nach Verschieberichtung das Drückelement gegen den Betätigungsendabschnitt des Betätigungsstößels zu drücken oder seine entgegengesetzte Rückstellbewegung zu ermöglichen.

Es ist von Vorteil, wenn der Betätigungsschieber ein bezüglich des Drückelementes gesondertes Bauteil der Zusatz-Betätigungseinheit ist und wenn der Betätigungsschieber und das Drückelement so aneinander angepasst sind, dass zwischen ihnen nur drückende Kräfte übertragbar sind.

Um eine stabile Lage des Betätigungsschiebers in seiner wirksamen Stellung zu gewährleisten, so dass er von dem eine Gegenkraft auf ihn ausübenden Drückelement keiner Rückstellkraft in Richtung der unwirksamen Stellung ausgesetzt ist, ist es zweckmäßig, an dem Drückelement einen Abstützvorsprung vorzusehen, der von einer sich rechtwinkelig zur Hubrichtung des Betätigungsstößels erstreckenden Abstützfläche des Betätigungsschiebers übergriffen wird, wenn der Betätigungsschieber in der wirksamen Stellung positioniert ist.

Alternativ oder zusätzlich können auch lösbar miteinander verrastbare Sicherungsmittel vorhanden sein, um den Betätigungsschieber, insbesondere durch Zusammenwirken mit dem Grundkörper, in der wirksamen Stellung lösbar zu fixieren.

Es ist vorteilhaft, wenn Maßnahmen getroffen sind, die ein Montieren der Zusatz-Betätigungseinheit in der Betriebsstellung verhindern, wenn der Betätigungsstößel durch Verdrehen des Betätigungsendabschnittes in der betätigten Arbeitsstellung verriegelt ist. Eine solche Verriegelung könnte nach dem Montieren der Zusatz-Betätigungseinheit nicht mehr aufgehoben werden. Entsprechende Maßnahmen sehen zweckmäßigerweise vor, dass der Betätigungsendabschnitt des Betätigungsstößels stirnseitig eine als Längsschlitz ausgebildete Eingriffsvertiefung aufweist, der ein am Drückelement der Zusatz-Betätigungseinheit angeordneter Sicherheitsvorsprung zugeordnet ist, der so gestaltet ist, dass er nur in der bei unverriegeltem Betätigungsstößel eingenommenen Drehposition des Betätigungsendabschnittes in die Eingriffsvertiefung eingreifen kann. Die Zusatz-Betätigungseinheit kann nur dann an der Ventileinheit angebracht werden, wenn der Längsschlitz durch Verdrehen so positioniert ist, dass der Sicherheitsvorsprung in ihn eingreifen kann. Dies ist dann der Fall, wenn der Betätigungsendabschnitt eine keine Verriegelung des Betätigungsstößels bewirkende Drehposition einnimmt.

Der Längsschlitz kann bei nicht montierter Zusatz-Betätigungseinheit verwendet werden, um ein zum Drücken und Drehen verwendbares Werkzeug einzuführen, mit dessen Hilfe der Betätigungsstößel betätigbar und bei Bedarf durch Verdrehen verriegelbar ist.

Der Sicherheitsvorsprung hat zweckmäßigerweise einen länglichen Querschnitt, wobei seine Querschnittslänge größer ist als die Breite der Eingriffsvertiefung und seine Querschnittsbreite geringer als die Breite der Eingriffsvertiefung. Damit ist gewährleistet, dass der bevorzugt plättchen- oder schwertartig gestaltete Sicherheitsvorsprung nur dann in den Längsschlitz eingreifen kann, wenn der Längsschlitz so positioniert ist, dass seine Längsachse parallel zur Querschnitts-Längsächse des Sicherheitsvorsprunges ausgerichtet ist.

Die mit der Zusatz-Betätigungseinheit ausgestattete oder ausstattbare Ventileinheit ist zweckmäßigerweise von elektro-fluidisch vorgesteuerter Bauart, wobei sie über ein durch Fluidkraft betätigbares Hauptventil und über ein die fluidische Ansteuerung des Hauptventils bewirkendes, elektrisch betätigbares Vorsteuerventil verfügt. Die Handhilfsbetätigungseinrichtung ist dabei zweckmäßigerweise dem Vorsteuerventil zugeordnet und ermöglicht dessen manuelle Betätigung zwecks Hervorrufens der Fluidbeaufschlagung des Hauptventils.

Alternativ kann die Ventileinheit auch von einem direkt elektrisch betätigbarem Ventil gebildet sein, dessen Ventilglied wahlweise elektrisch oder mittels der Handhilfsbetätigungseinrichtung manuell betätigbar ist.

Nachfolgend wird die Erfindung anhand der beiliegenden Zeichnung näher erläutert. In dieser zeigen:
- Figur 1: eine bevorzugte Ausführungsform der erfindungsgemäßen Ventileinrichtung in einer perspektivischen Darstellung, wobei eine unter Einnahme ihrer Betriebsstellung an einer Ventileinheit der Ventileinrichtung angebrachte Zusatz-Betätigungseinheit ersichtlich ist,
- Figur 2: die Ventileinrichtung aus Figur 1 im von der Ventileinheit abgenommenen Zustand der Zusatz-Betätigungseinheit,
- Figur 3: die Ventileinrichtung aus Figur 1 in einem Längsschnitt gemäß Schnittlinie III-III aus Figur 1,
- Figur 4: den mit der Handhilfsbetätigungseinrichtung versehenen, in Figur 3 strichpunktiert bei IVa umrahmten Endabschnitt der in Figuren 1 bis 3 illustrierten Ventileinrichtung, versehen mit einem über Eck gehenden Schnitt gemäß Schnittlinie IV-IV aus Figur 1,
- Figur 5: einen Schnitt durch die Ventileinrichtung im Bereich der Handhilfsbetätigungseinrichtung gemäß Schnittlinie V-V aus Figur 3,
- Figur 6: den in Figur 3 markierten Ausschnitt IVa in einer vergrößerten Darstellung, wobei der Betätigungsschieber bei Einnahme der unwirksamen Stellung gezeigt ist und
- Figur 7: den in Figur 6 gezeigten Endabschnitt der Ventileinrichtung bei in die wirksame Stellung positioniertem Betätigungsschieber.

Aus der Zeichnung ist eine insgesamt mit Bezugsziffer 1 bezeichnete Ventileinrichtung ersichtlich, die sich aus einer Ventileinheit 2 und einer Zusatz-Betätigungseinheit 3 für eine in die Ventileinheit 2 integrierte Handhilfsbetätigungseinrichtung 10 zusammensetzt.

Die Ventileinheit 2 ist von elektrisch betätigbarer Bauart und ist zweckmäßigerweise als elektro-fluidisch vorgesteuertes Mehrwegeventil ausgebildet. Sie setzt sich insbesondere aus einem durch Fluidkraft betätigbaren Hauptventil 4 und mindestens einem mit dem Hauptventil 4 zu der Ventileinheit 2 zusammengefassten, elektrisch betätigbaren Vorsteuerventil 5 zusammen.

Die Ventileinheit 2 verfügt über ein Ventilgehäuse 6, das bevorzugt mehrteilig ausgebildet ist, wobei zweckmäßigerweise das Hauptventil 4 und das Vorsteuerventil 5 jeweils eine eigene Gehäusekomponente 6a, 6b des Ventilgehäuses 6 aufweisen.

Das Hauptventil 4 enthält mindestens ein im Inneren des Ventilgehäuses 6 angeordnetes Hauptventilglied 7, das unter Ausführung einer durch einen Doppelpfeil angedeuteten Umschaltbewegung 7a bevorzugt linear zwischen verschiedenen Schaltstellungen umschaltbar ist. Bei dem Hauptventilglied 7 handelt es sich insbesondere um einen Ventilschieber.

Das Hauptventilglied 7 erstreckt sich in einer Gehäuseausnehmung 7b des Ventilgehäuses 6, in die seitlich, an in der Längsrichtung der Gehäuseausnehmung 7b zueinander beabstandeten Stellen, mehrere Hauptventilkanäle 8 des Hauptventils 4 einmünden, die das Ventilgehäuse 6 durchsetzen und andererseits zur Außenfläche des Ventilgehäuses 6 ausmünden. Mindestens ein Hauptventilkanal 8 ist ein mit einer externen Druckquelle verbindbarer Speisekanal und mindestens ein weiterer Hauptventilkanal 8 bildet einen mit einer Drucksenke und insbesondere mit der Atmosphäre verbundenen Entlastungskanal. Außerdem ist mindestens ein Hauptventilkanal 8 als Arbeitskanal ausgebildet, der mit einem anzusteuernden Verbraucher verbindbar ist, wobei das Hauptventil 4 zweckmäßigerweise über zwei solcher Arbeitskanäle verfügt.

Je nach Schaltstellung kann das Hauptventilglied 7 die Hauptventilkanäle 8 in an sich bekannter Weise in unterschiedlichem Muster fluidisch miteinander verbinden oder voneinander abtrennen. Um dies zu erreichen, ist das Hauptventil 14 zweckmäßigerweise auch noch mit in der Gehäuseausnehmung 7b platzierten ringförmigen Dichtelementen 12 ausgestattet, die dazu dienen, im Zusammenwirken mit dem Hauptventilglied 7 die mit den Hauptventilkanälen 8 kommunizierenden Abschnitte der Gehäuseausnehmung 7b bei entsprechender Schaltstellung des Hauptventilglieds 7 dicht voneinander abzutrennen.

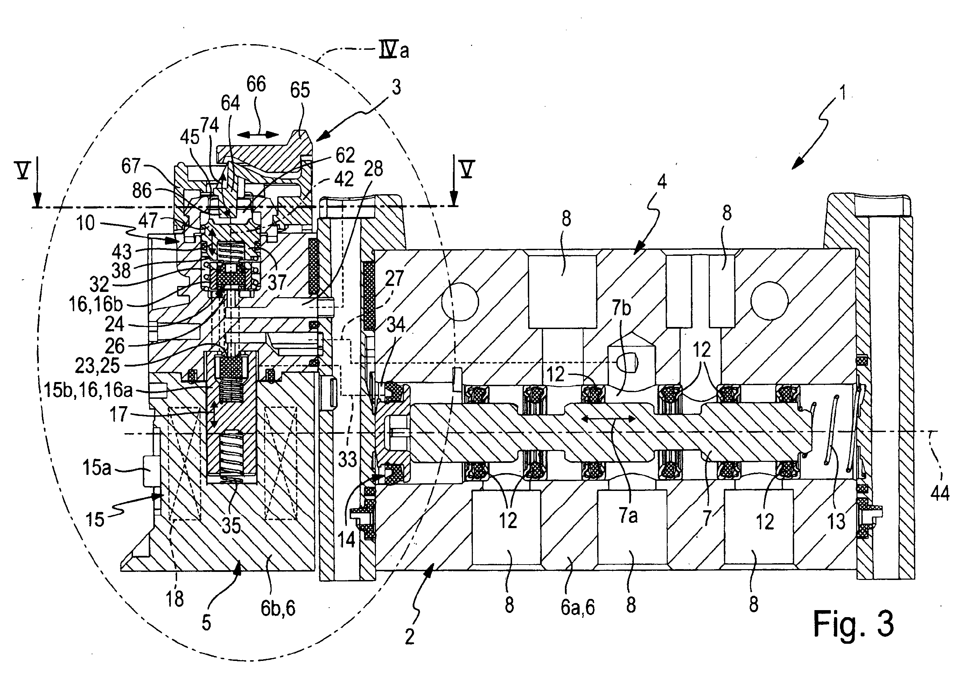

Exemplarisch ist das Hauptventilglied 7 durch Federmittel 13 in eine aus Figur 3 ersichtliche erste Schaltstellung vorgespannt, aus der es in eine zweite Schaltstellung umschaltbar ist, indem eine mit ihm wirkverbundene Antriebsfläche 14 mit einem Antriebsfluid beaufschlagt wird.

Die Fluidbeaufschlagung der Antriebsfläche 14 wird durch das Vorsteuerventil 5 gesteuert. Dieses enthält eine elektrische Antriebseinrichtung 15, die exemplarisch als Elektromagneteinrichtung ausgebildet ist.

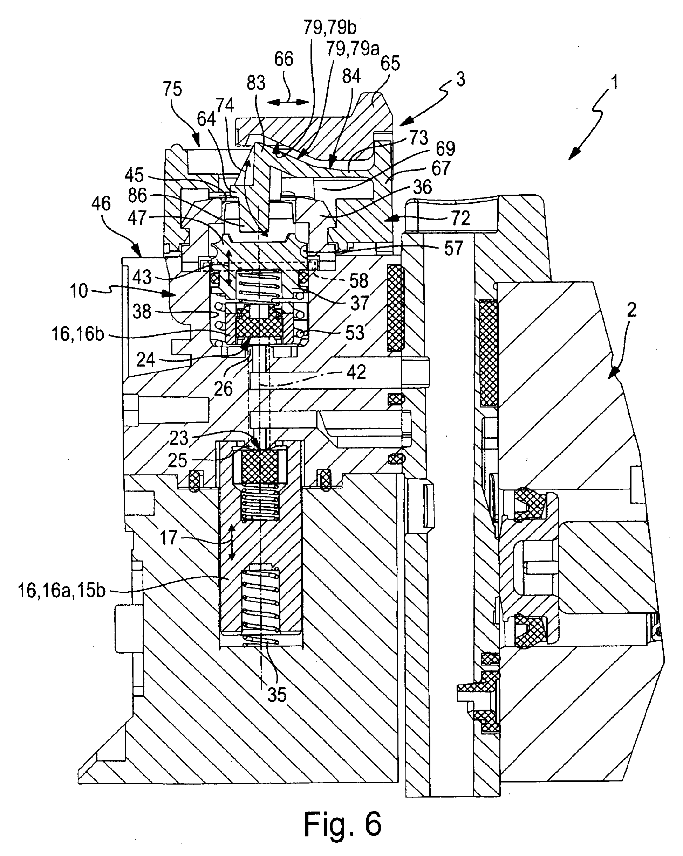

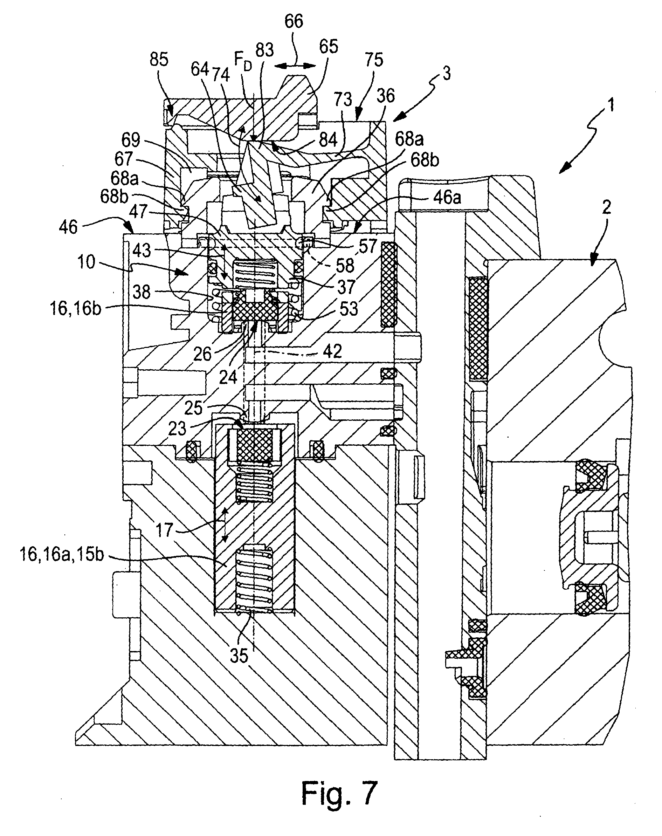

Die elektrische Antriebseinrichtung 15 kann unter Verwendung von elektrischen Kontaktmitteln 15a derart elektrisch angesteuert werden, dass ein Vorsteuerventilglied 16 des Vorsteuerventils 5 unter Ausführung einer durch einen Doppelpfeil angedeuteten linearen Umschaltbewegung 17 zwischen einer aus Figuren 3 und 6 ersichtlichen ersten Schaltstellung und einer diesbezüglich axial verlagerten, in Figur 7 illustrierten zweiten Schaltstellung bewegbar ist.

Exemplarisch setzt sich das Vorsteuerventilglied 16 aus zwei miteinander bewegungsgekoppelten Komponenten 16a, 16b zusammen. Eine dieser Komponenten 16a ist exemplarisch in Baueinheit mit einem beweglichen Magnetanker der elektrischen Antriebseinrichtung 15 ausgeführt, der durch elektrisches Erregen einer Spuleneinrichtung 18 der elektrischen Antriebseinrichtung 15 verstellbar ist.

Das bevorzugt stößelartig ausgebildete Vorsteuerventilglied 16 verfügt über zwei in der Richtung der Umschaltbewegung 17 einander entgegengesetzt orientierte erste und zweite Dichtflächen 23, 24, die jeweils einem von zwei Ventilsitzen 25, 26 gegenüberliegen. Der erste Ventilsitz 25 umrahmt die Mündung eines Vorsteuerspeisekanals 27, der - insbesondere aus dem Hauptventil 4 heraus - mit einem das oben erwähnte Antriebsfluid repräsentierenden Druckfluid gespeist wird. Der zweite Ventilsitz 26 umrahmt die Mündung eines Vorsteuerentlastungskanals 28, der mit einer Drucksenke, insbesondere mit der Atmosphäre verbunden ist. Ein ebenfalls vorhandener Vorsteuerarbeitskanal 33 verbindet eine von der Antriebsfläche 14 des Hauptventilglieds 7 begrenzte Antriebskammer 34 mit einer das Vorsteuerventilglied 16 aufnehmenden Ventilkammer 32, in die auch der Vorsteuerspeisekanal 27 und der Vorsteuerentlastungskanal 28 einmünden.

Befindet sich das Vorsteuerventilglied 16 in der ersten Schaltstellung, trennt es den Vorsteuerspeisekanal 27 von der Ventilkammer 32 ab und verbindet gleichzeitig den Vorsteuerarbeitskanal 33 mit dem druckmäßig entlasteten Vorsteuerentlastungskanal 28. Die Antriebskammer 34 ist somit drucklos, sodass auf die Antriebsfläche 14 keine fluidische Stellkraft wirkt und das Hauptventilglied 7 durch die Federmittel 13 in seiner ersten Schaltstellung gehalten wird.

In der durch Ausführen der Umschaltbewegung 17 erhältlichen zweiten Schaltstellung des Vorsteuerventilgliedes 16 liegt eine Fluidverbindung zwischen dem Vorsteuerspeisekanal 27 und dem Vorsteuerarbeitskanal 33 vor, während gleichzeitig der Vorsteuerentlastungskanal 28 abgetrennt ist. Auf diese Weise wird der Antriebskammer 34 das insbesondere von Druckluft gebildete Antriebsfluid zugeführt, sodass auf die Antriebsfläche 14 eine fluidische Stellkraft wirkt, die das Hauptventilglied 7 unter Überwindung der Federmittel 13 in seine zweite Schaltstellung verlagert.

Exemplarisch liegt im elektrisch deaktivierten Zustand der Antriebseinrichtung 15 die erste Schaltstellung des Vorsteuerventilgliedes 16 vor, die durch eine das Vorsteuerventilglied 16 ständig beaufschlagende Federeinrichtung 35 aufrecht erhalten wird. Zum Umschalten in die zweite Schaltstellung des Vorsteuerventils 16 ist die rückstellende Kraft der Federeinrichtung 35 zu überwinden.

Die Ventileinheit 2 ist mit der schon angesprochenen Handhilfsbetätigungseinrichtung 10 ausgestattet, die es ermöglicht, das Vorsteuerventilglied 16 ohne Mitwirkung der elektrischen Antriebseinrichtung 15 durch eine rein manuell aufzubringende Betätigungskraft aus der ersten Schaltstellung in die zweite Schaltstellung zu verlagern und dort solange wie gewünscht zu halten. Die Handhilfsbetätigungseinrichtung 10 wird vor allem zu Einrichtungszwecken genutzt, wenn durch manuelle Betätigung ausgewählte Betriebsvorgänge an einer an die Ventileinheit 2 angeschlossenen Maschine oder Anlage ausgelöst werden sollen.

Die Handhilfsbetätigungseinrichtung 10 enthält einen Betätigungsstößel 37, der in einer im Folgenden als Stößelaufnahme 38 bezeichneten Ausnehmung des Ventilgehäuses 6 in Achsrichtung der Längsachse 42 der Stößelaufnahme 38 verschiebbar aufgenommen ist. Die mögliche Verschiebebewegung des Betätigungsstößels 37 sei im Folgenden als Hubbewegung 43 bezeichnet und ist in der Zeichnung durch einen Doppelpfeil illustriert.

Die Stößelaufnahme 38 erstreckt sich bevorzugt rechtwinkelig zu einer Längsachse 44 der Ventileinheit 2, wobei diese Längsachse 44 zweckmäßigerweise mit der Richtung der Umschaltbewegung 7a des Hauptventilglieds 7 zusammenfällt.

Exemplarisch ist die Stößelaufnahme 38 koaxial zu der Ventilkammer 32 ausgebildet, wobei sie sich axial an die Stößelaufnahme 38 anschließt oder - gemäß Ausführungsbeispiel - von einem axialen Endabschnitt der Ventilkammer 32 gebildet ist. Die Stößelaufnahme 38 mündet über eine Außenöffnung 45 zu einer ersten Außenfläche 46 des Ventilgehäuses 6 aus. Die periphere Wandung der Stößelaufnahme 38 fungiert als Führungsmittel zur Linearführung des Betätigungsstößels 37 bei Ausführung der Hubbewegung 43. Zweckmäßigerweise ist die Außenöffnung 45 von einem zu der Längsachse 42 koaxialen Ringvorsprung 36 des Ventilgehäuses 6 gebildet, der bezüglich ihn umgebenden Flächenabschnitten 46a der ersten Außenfläche 46 in der Achsrichtung der Längsachse 42 vorsteht bzw. erhaben ist.

Der Betätigungsstößel 37 ist durch eine zweckmäßigerweise im Inneren der Stößelaufnahme 38 angeordnete Rückstellfedereinrichtung 53 in eine von dem Vorsteuerventilglied 16 axial abgerückte unbetätigte Grundstellung vorgespannt, die aus Figuren 3 und 6 ersichtlich ist. Hierbei stützt sich der Betätigungsstößel 37 an der Begrenzungswand der Stößelaufnahme 38 axial ab. In der unbetätigten Grundstellung nimmt der Betätigungsstößel 37 in der Stößelaufnahme 38 seine maximal nach außen in Richtung zur Außenöffnung 45 verschobene Position ein.

Ausgehend von der unbetätigten Grundstellung kann der Betätigungsstößel 37 unter Überwindung der Kraft der Rückstellfedereinrichtung 53 in eine axial tiefer in der Stößelaufnahme 38 angeordnete Arbeitsstellung verschoben werden, die aus Figur 7 ersichtlich ist. Bei dieser Betätigung wirkt der Betätigungsstößel 37 axial auf das Vorsteuerventilglied 16 ein und schiebt dieses vor sich her bis in die aus Figur 7 ersichtliche zweite Schaltstellung.

Diese Bewegung des Betätigungsstößels 37 erfolgt im Rahmen einer Tastbetätigung eines der Außenöffnung 45 zugeordneten, als Betätigungsendabschnitt 47 bezeichneten axialen Endabschnittes des Betätigungsstößels 37. Der Betätigungsendabschnitt 47 ist durch die Außenöffnung 45 hindurch für eine tastende, d.h. drückende Beaufschlagung zugänglich.

Wenn die erwähnte Zusatz-Betätigungseinheit 3 nicht montiert ist, kann der Betätigungsstößel 37 an seinem Betätigungsendabschnitt 47 wahlweise mit dem Finger einer Hand oder mit einem handgeführten Betätigungswerkzeug beaufschlagt werden, um die erwähnte Tastbetätigung zwecks Umschaltens zwischen der unbetätigten Grundstellung gemäß Figuren 3 und 6 und der betätigten Arbeitsstellung gemäß Figur 7 hervorzurufen.

Bei der geschilderten reinen Tastbetätigung bewirkt ein Wegnehmen der drückenden Betätigungskraft, dass der Betätigungsstößel 37 wieder in die unbetätigte Grundstellung zurückkehrt und dementsprechend auch das Vorsteuerventilglied 16 wieder in die erste Schaltstellung zurückkehren kann.

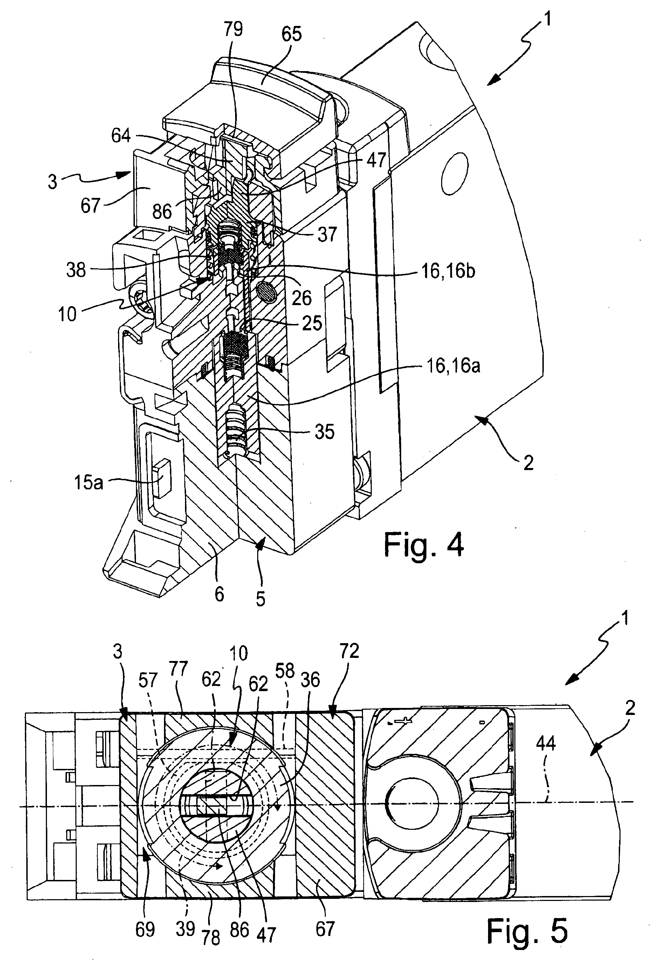

Die Handhilfsbetätigungseinrichtung 10 ist darüber hinaus so ausgelegt, dass der Betätigungsstößel 37 in seiner Arbeitsstellung bezüglich des Ventilgehäuses 6 mechanisch verriegelbar ist, sodass er auch bei Wegnahme der manuell aufgebrachten Betätigungskraft in der Arbeitsstellung verbleibt. Dadurch kann das Vorsteuerventilglied 16 ohne ständigen manuellen Zugriff für beliebig lange Zeit in der zweiten Schaltstellung gehalten werden. Das Verriegeln und Entriegeln geschieht im Rahmen einer in Figur 5 durch einen strichpunktierten Doppelpfeil angedeuteten Drehbewegung 39 des Betätigungsstößels 37, die durch Einleiten eines Drehmomentes in den von außen her zugänglichen Betätigungsendabschnitt 47 hervorrufbar ist.

Der Betätigungsendabschnitt 47 verfügt stirnseitig an der der Außenöffnung 45 zugewandten Seite über eine bevorzugt als Längsschlitz ausgebildete Eingriffsvertiefung 62, in die ein Betätigungswerkzeug, insbesondere der klingenförmige Abschnitt eines Schraubendrehers, einführbar ist, um beim anschließenden Verdrehen ein die Drehbewegung 39 bewirkendes Drehmoment auf den Betätigungsendabschnitt 47 auszuüben.

Der Verriegelungsvorgang ist beim Ausführungsbeispiel durchführbar, nachdem zuvor der Betätigungsstößel 37 mit Hilfe des in die Eingriffsvertiefung 62 eingesteckten Betätigungswerkzeuges in die Arbeitsstellung verschoben wurde. Durch das Verdrehen wird bewirkt, dass am Betätigungsendabschnitt 47 ausgebildete erste Drehverriegelungsmittel 57 mit am Ventilgehäuse 6 angeordneten zweiten Drehverriegelungsmitteln 58 wahlweise in oder außer Verriegelungseingriff gelangen. Beispielsweise enthalten die ersten Drehverriegelungsmittel 57 eine am Außenumfang des Betätigungsendabschnittes 47 ausgebildete Nut oder Stufe, während die zweiten Drehverriegelungsmittel 58 von einem beispielsweise stiftförmigen Riegelelement gebildet sind, das mit der Nut oder Stufe in Eingriff gelangen kann.

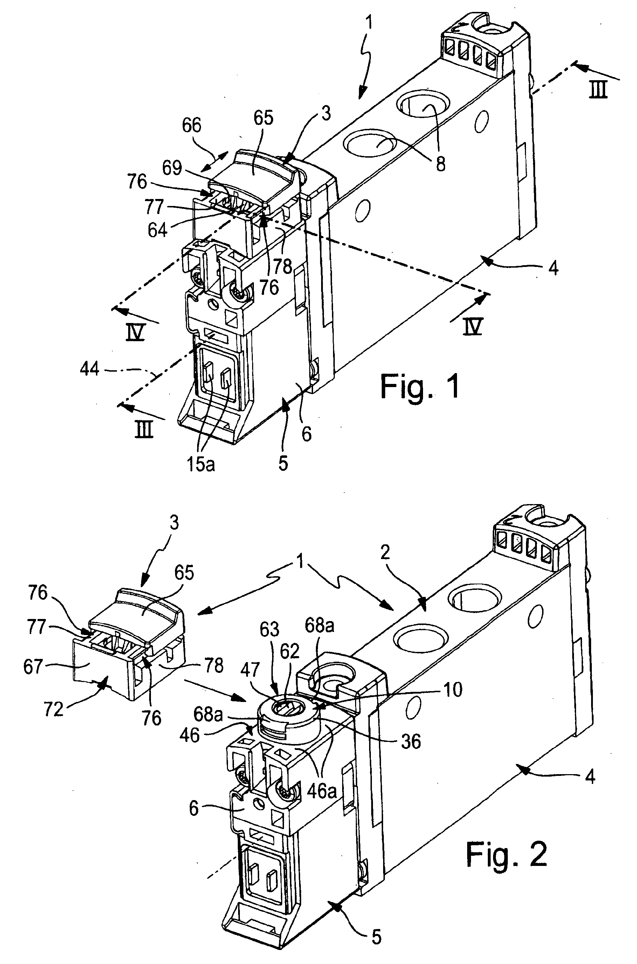

Die bisher hinsichtlich der Handhilfsbetätigungseinrichtung 10 beschriebenen Aktionen sind möglich, solange der Betätigungsendabschnitt 47 im Bereich der Außenöffnung 45 frei zugänglich ist. Dies ist solange der Fall, wie die eingangs erwähnte Zusatz-Betätigungseinheit 3 nicht an einem im Bereich der Außenöffnung 45 an der Außenfläche 46 des Ventilgehäuses 6 vorgesehenen Montageplatz 63 montiert ist, wie dies in Figur 2 illustriert ist. Die Zusatz-Betätigungseinheit 3 kann unter Einnahme einer Betriebsstellung im Bereich des Montageplatzes 63 am Ventilgehäuse der Ventileinheit 2 befestigt werden, wobei die daraus resultierende Betriebsstellung in den Figuren 1 und 3 bis 7 illustriert ist.

Wenn die Zusatz-Betätigungseinheit 3 an der Ventileinheit 2 montiert ist, lässt sich der Betätigungsstößel 37 nurmehr indirekt, unter Vermittlung der Zusatz-Betätigungseinheit betätigen. Die mögliche Betätigung beschränkt sich dabei auf die erwähnte Tastbetätigung zur Ausführung der Umschaltbewegung 37. Gleichwohl besitzt die Zusatz-Betätigungseinheit 3 eine dahingehende Funktionalität, dass der Betätigungsstößel 47 wahlweise tastend betätigbar ist oder auch in der betätigten Arbeitsstellung für beliebig lange Zeit lösbar blockierbar ist. Die volle Funktionalität der Handhilfsbetätigungseinrichtung 10 bleibt somit auch im an die Ventileinheit 2 angebauten Zustand der Zusatz-Betätigungseinheit 3 erhalten.

Die Zusatz-Betätigungseinheit 3 verfügt über ein dem Betätigungsendabschnitt 47 axial vorgelagertes Drückelement 64, das mit einer Drückkraft F_{D} drückend betätigbar ist, wobei die Drückkraft zur Ausführung der Hubbewegung 43 direkt auf den Betätigungsendabschnitt 47 des Betätigungsstößels 37 übertragen wird.

Die Drückkraft F_{D} wird dem Drückelement 64 allerdings nicht direkt auferlegt, sondern mit Hilfe eines antriebsmäßig mit dem Drückelement 64 zusammenwirkenden Betätigungsschiebers 65 der Zusatz-Betätigungseinheit 3, der zu diesem Zweck quer zur Hubrichtung des Betätigungsstößels 37 unter Ausführung einer durch einen Doppelpfeil angedeuteten Betätigungsbewegung 66 manuell verschiebbar ist. Der Betätigungsschieber 65 kann dabei wahlweise in einer aus Figuren 3 und 6 ersichtlichen unwirksamen Stellung oder in einer aus Figur 7 ersichtlichen wirksamen Stellung positioniert werden. In der unwirksamen Stellung ruft er keine Betätigung des Drückelementes 64 vor, während er in der wirksamen Stellung das Drückelement 64 betätigt und zur Ausführung der Hubbewegung 43 an den Betätigungsendabschnitt 47 des Betätigungsstößels 37 angedrückt hat.

Die Betätigungsbewegung 66 verläuft zweckmäßigerweise in der gleichen Richtung wie die Längsachse 44 der Ventileinheit 2, was auch bei im Umfeld der Ventileinrichtung 1 herrschenden beengten Platzverhältnissen eine gute Zugänglichkeit und leichte Bedienbarkeit gewährleistet.

Die Zusatz-Betätigungseinheit 3 enthält zweckmäßigerweise einen bevorzugt rahmenförmig strukturierten Grundkörper 67, der zum einen das bezüglich ihm bewegliche Drückelement 64 trägt und über den die Zusatz-Betätigungseinheit 2 an der Ventileinheit 2 bei Einnahme der Betriebsstellung befestigt ist.

Die Befestigung ist zweckmäßigerweise eine Rastbefestigung. Exemplarisch sind am Ventilgehäuse 6 an dem Montageplatz 63 erste Rastverbindungsmittel 68a vorhanden, mit denen am Grundkörper 67 angeordnete komplementäre zweite Rastverbindungsmittel 68b beim Ansetzen an die Ventileinheit 2 in Rasteingriff gelangen, sodass der Grundkörper 67 unbeweglich an der Ventileinheit 2 gehalten ist.

Die Rastverbindungsmittel 68a, 68b sind beim Ausführungsbeispiel so ausgebildet, dass die hergestellte Rastverbindung normalerweise unlösbar ist und sich ohne Beschädigung des Grundkörpers 67 nicht mehr aufheben lässt. Hiervon abweichend können die Rastverbindungsmittel 68a, 68b allerdings auch zur Herstellung einer lösbaren Rastverbindung ausgeführt sein.

Beim Ausführungsbeispiel ist die Zusatz-Betätigungseinheit 3 in der Betriebsstellung mit ihrem Grundkörper 67 auf den Ringvorsprung 36 aufgesetzt, sodass letzterer von dem Grundkörper 67 umrahmt wird. Mit anderen Worten taucht der Ringvorsprung 36 ein Stück weit in den vom Grundkörper 67 umrahmten Innenraum 69 hinein.

Die ersten Rastverbindungsmittel 68a sind zweckmäßigerweise am Außenumfang des Ringvorsprunges 36 und die zweiten Rastverbindungsmittel 68b an der Innenfläche des rahmenförmigen Grundkörpers 67 ausgebildet.

An dieser Stelle sei nachzutragen, dass der Betätigungsstößel 37 bevorzugt so ausgebildet ist, dass er unabhängig von der bezüglich des Ventilgehäuses 2 eingenommenen Hubposition an der Außenöffnung 45 nicht herausragt. Er ist zweckmäßigerweise unabhängig von seiner Betriebsstellung vollständig versenkt im Inneren des ventilgehäuses 6 aufgenommen.

Das Drückelement 64 befindet sich exemplarisch am freien Ende eines andernends am Grundkörper 67 befestigten und sich quer zur Hubrichtung des Betätigungsstößels 37 in den Innenraum 69 des Grundkörpers 67 hineinragenden Tragarmes 73. Dieser Tragarm 73 ist federelastisch verformbar, sodass unter seiner Vermittlung das Drückelement 64 bezüglich des Grundkörpers 67 federnd auslenkbar aufgehängt ist.

Das Drückelement 64 kann unter federelastischer Verformung des Tragarmes 73 eine durch einen Doppelpfeil angedeutete Schwenkbewegung 74 in einer zur Längsachse 42 der Stößelaufnahme 38 parallelen Ebene ausführen. Zu dieser Schwenkbewegung 74 kann das Drückelement 64 durch Aufbringen und Wegnehmen der Drückkraft F_{D} veranlasst werden.

Wird das Drückelement 64 durch Aufbringen der Drückkraft F_{D} in Richtung zum Betätigungsstößel 37 verschwenkt, überträgt es die auf es einwirkende Drückkraft F_{D} ebenfalls als Drückkraft auf den Betätigungsendabschnitt 47, sodass der Betätigungsstößel 37 unter Ausführung der Hubbewegung 43 aus der unbetätigten Grundstellung in die betätigte Arbeitsstellung verschoben wird. Dabei ist eine Rückstellkraft des federnden Tragarmes 73 zu überwinden.

Wird die Drückkraft F_{D} anschließend wieder weggenommen, kehrt das Drückelement 64 durch die aufgebauten Federkräfte in die nicht betätigte Ausgangsstellung zurück, wobei der Betätigungsstößel 37 in der weiter oben schon geschilderten Weise nachfolgt.

Die Zusatz-Betätigungseinheit 3 lässt sich besonders einfach herstellen, wenn das Drückelement 64, der Tragarm 73 und der Grundkörper 67 zu einer einstückigen Grundeinheit 72 zusammengefasst sind. Dies ist beim Ausführungsbeispiel der Fall. Die Grundeinheit 72 ist hier ein einstückiges Kunststoffbauteil.

Der Grundkörper 67 bildet einen Träger für den Betätigungsschieber 65. Dieser ist an dem Grundkörper 67 zur Ermöglichung der linearen Betätigungsbewegung 66 verschiebbar gelagert.

Zweckmäßigerweise ist der Betätigungsschieber 65 auf der dem Betätigungsendabschnitt 47 in der Achsrichtung der Längsachse 42 entgegengesetzten Oberseite 75 des Grundkörpers 67 angeordnet. Er überspannt dabei zumindest partiell den nach oben offenen Innenraum 69 des Grundkörpers 67 und erstreckt sich über das Drückelement 64 hinweg.

Mit Hilfe von Linearführungsmitteln 76 ist der Betätigungsschieber 65 an dem Grundkörper 67 verschiebbar gelagert. Diese Verschiebelagerung erfolgt zweckmäßigerweise an zwei einander quer zur Richtung der Betätigungsbewegung 66 mit Abstand gegenüberliegenden Seitenwänden 77, 78 des rahmenförmigen Grundkörpers 67. Bevorzugt enthalten die Linearführungsmittel 76 an jeder Seitenwand 77, 78 eine Führungsschiene, die von einem seitlichen Randabschnitt des Betätigungsschiebers 65 gleitverschieblich übergriffen wird.

Günstige Betätigungskräfte für den Betätigungsschieber 65 stellen sich ein, wenn der Betätigungsschieber 65 und das Drückelement 64 über eine Schrägflächenanordnung 79 antriebsmäßig kooperieren. Die Schrägflächenanordnung 79 hat eine an der Oberseite des Drückelementes 64 angeordnete, nach oben weisende erste Schrägfläche 79a, der eine an der Unterseite des Betätigungsschiebers 65 nach unten weisend angeordnete zweite Schrägfläche 79b gegenüberliegt. Beide Schrägflächen 79a, 79b haben gleiche Steigungsrichtungen und vorzugsweise die gleiche Steigung. Bezogen auf die Achsrichtung der Längsachse 42 steigen beide Schrägflächen 79a, 79b in der Bewegungsrichtung, in der der Betätigungsschieber 65 zum Umschalten in die wirksame Stellung verschoben wird, an und entfernen sich von dem Betätigungsendabschnitt 47.

Die oben erwähnte Drückkraft F_{D} ist durch den Betätigungsschieber 65 auf das Drückelement 64 ausübbar. In der aus Figuren 3 und 6 ersichtlichen unwirksamen Stellung nimmt der Betätigungsschieber 65 bezüglich des Drückelementes 64 eine derartige Relativposition ein, dass er von dem Drückelement 64 abgehoben ist und zwischen den beiden Schrägflächen 79a, 79b zweckmäßigerweise ein kleiner Abstand vorliegt. Hiervon abweichend kann die Auslegung aber auch so getroffen sein, dass der Betätigungsschieber 65 auch schon in der unwirksamen Stellung eine geringe Vorspannung auf das Drückelement 64 ausübt, indem die erste Schrägfläche 79a an der zweiten Schrägfläche 79b anliegt.

Wird der Betätigungsschieber 65 unter Ausführung der Betätigungsbewegung 66 ausgehend von der unwirksamen Stellung in die wirksame Stellung verschoben, gleiten die beiden Schrägflächen 79a, 79b aneinander ab und das Drückelement 64 erfährt die Betätigungskraft F_{D}, durch die es zum Umschalten des Betätigungsstößels 37 gegen dessen Betätigungsendabschnitt 47 gedrückt wird.

Beide Stellungen des Betätigungsschiebers 65 sind stabile Stellungen, die auch dann beibehalten werden, wenn die zum Verschieben manuell aufzubringende Betätigungskraft weggenommen wird. In der unwirksamen Stellung ergibt sich die Stabilität daraus, dass das Drückelement 64 durch den federnden Tragarm 73 in der nicht betätigten Stellung gehalten wird.

Wenn das Drückelement 64 nicht durch einen federelastischen Tragarm 73 am Grundkörper 67 gelagert ist, sondern auf andere Art und Weise, kommen zweckmäßigerweise anstelle des Tragarmes 73 andere Federmittel zum Einsatz, die das Drückelement 64 relativ zum Grundkörper 67 in die unbetätigte Ausgangsstellung vorspannen.

Die Stabilität der wirksamen Stellung des Betätigungsschiebers 65 ergibt sich beim Ausführungsbeispiel dadurch, dass das Drückelement 64 einen dem Betätigungsschieber 65 zugewandten Abstützvorsprung 83 aufweist, über den die erste Schrägfläche 79a beim Übergang in die wirksame Stellung hinweggleitet, wobei eine sich an die erste Schrägfläche 79a anschließende Abstützfläche 84 des Betätigungsschiebers 65 den Abstützvorsprung 83 an der Oberseite übergreift und abstützt, sodass er in der betätigten Stellung festgehalten wird. Indem sich die Abstützfläche 84 in einer zur Hubrichtung oder Längsachse 42 des Betätigungsstößels 37 rechtwinkeligen Ebene erstreckt, kann der aufgrund der Rückstellkraft des federnden Tragarmes 73 an die Abstützfläche 84 andrückende Abstützvorsprung 83 keine resultierende Stellkraft in der Richtung der Betätigungsbewegung 66 auf den Betätigungsschieber 65 ausüben.

Soll der Betätigungsstößel 37 rein tastend betätigt werden, verschiebt man den Betätigungsschieber 65 kurzzeitig aus der unwirksamen Stellung in die wirksame Stellung und wieder zurück. Soll der Betätigungsstößel 37 hingegen für längere Zeit ohne manuelle Einwirkung in der Arbeitsstellung blockiert werden, verschiebt man den Betätigungsschieber 65 in die wirksame Stellung und belässt ihn dort solange wie nötig.

Bei Bedarf kann die Zusatz-Betätigungseinheit 3 mit Sicherungsmitteln 85 ausgestattet sein, die in der wirksamen Stellung des Betätigungsschiebers 65 lösbar miteinander verrastet sind, um diese wirksame Stellung lösbar zu fixieren. Die miteinander verrastbaren Sicherungsmittel 85 befinden sich zweckmäßigerweise zum einen am Betätigungsschieber 65 und zum anderen am Grundkörper 67. Für das Ausführungsbeispiel trifft dies zu.

Die Sicherungsmittel 85 können zusätzlich oder alternativ zu der allein schon für eine stabile wirksame Stellung sorgenden Abstützfläche 84 vorhanden sein. Sie haben den Vorteil, auch bei Erschütterungen die wirksame Stellung zuverlässig solange wie gewünscht aufrechtzuerhalten.

Ein vorteilhafter Aspekt der Zusatz-Betätigungseinheit 3 besteht darin, dass sie zweckmäßigerweise nur dann in der Betriebsstellung an der Ventileinheit 2 fixierbar ist, wenn der Betätigungsstößel 37 nicht durch die Drehverriegelungsmittel 57, 58 in der Arbeitsstellung verriegelt ist. Dies wird dadurch erreicht, dass an dem Drückelement 64 an der dem Betätigungsendabschnitt 47 zugewandten Unterseite ein Sicherheitsvorsprung 86 angeordnet ist, der so gestaltet ist, dass er nur in der bei unverriegeltem Betätigungsstößel 37 eingenommenen Drehposition des Betätigungsendabschnittes 47 in die stirnseitige Eingriffsvertiefung 62 eingreifen kann.

Exemplarisch erstreckt sich die von einem Längsschlitz gebildete Eingriffsvertiefung 62 in der unverriegelten Drehposition des Betätigungsstößels 37 in einer zu der Längsachse 44 der Ventileinheit 2 parallelen Ebene (siehe Figur 5). Wie in Figur 5 strichpunktiert angedeutet ist, erstreckt sich diese Eingriffsvertiefung 62 in der verriegelten Drehposition des Betätigungsstößels 37 in einer dazu rechtwinkeligen Richtung.

Der nach unten ragende Sicherungsvorsprung 86 hat einen länglichen Querschnitt, wobei seine Querschnittslänge größer ist als die Breite der Eingriffsvertiefung 62 und seine Querschnittsbreite geringer ist als die Breite der Eingriffsvertiefung 62. Somit kann er nur dann in die Eingriffsvertiefung 62 eintauchen, wenn selbige parallel zur Längsachse des Querschnittes des Sicherungsvorsprunges 86 ausgerichtet ist. Dieser Zustand ist in Figur 5 illustriert.

Nimmt der Betätigungsstößel 37 die verriegelte Drehposition ein, liegt eine Überkreuzkonfiguration zwischen der Längserstreckung der Eingriffsvertiefung 62 und des Querschnittes des Sicherungsvorsprunges 86 vor, sodass letzterer nicht in der Lage ist, in die Eingriffsvertiefung 62 einzutauchen.

Somit kann die Zusatz-Betätigungseinheit 3 an der Ventileinheit 2 nur montiert werden, wenn sich der Betätigungsstößel 37 in der unverriegelten Drehposition befindet. Bei montierter Zusatz-Betätigungseinheit 3 taucht mithin der am Drückelement 64 angeordnete Sicherungsvorsprung 86 in die Eingriffsvertiefung 62 ein.

Der Betätigungsschieber 65 ist zweckmäßigerweise mittels einer Rastverbindung, die die Verschiebbarkeit gewährleistet, am Grundkörper 67 fixiert. Zweckmäßigerweise bilden unmittelbar die ineinander eingreifenden Komponenten der Linearführungsmittel 76 eine entsprechende Rastverbindungseinrichtung.

Die Erfindung lässt sich in Verbindung mit jeglicher Art von Ventileinheit 2 verwenden. So ist bei einem möglichen, nicht illustrierten Ausführungsbeispiel die Ventileinheit 2 von einem direkt elektrisch betätigbaren Ventil gebildet, beispielsweise in der Art des beim Ausführungsbeispiels vorhandenen Vorsteuerventils 5, das dann direkt einen an seine Ventilkanäle angeschlossenen Verbraucher steuern kann.

## Patentansprüche

1. Ventileinrichtung, mit einer ein ventilgehäuse (6) aufweisenden, elektrisch betätigbaren ventileinheit (2), die zur manuellen Betätigung mit einer Handhilfsbetätigungseinrichtung (10) ausgestattet ist, die einen beweglich in dem Ventilgehäuse (6) angeordneten Betätigungsstößel (37) aufweist, der über einen von außerhalb des Ventilgehäuses (6) zugänglichen Betätigungsendabschnitt (47) verfügt und der zum einen im Rahmen einer Tastbetätigung durch tastende Beaufschlagung des Betätigungsendabschnittes (47) im Rahmen einer Hubbewegung (43) zwischen einer unbetätigten Grundstellung und einer betätigten Arbeitsstellung linear verschiebbar ist und zum anderen im Rahmen einer Drehbetätigung durch Verdrehen des Betätigungsendabschnittes (47) in der Arbeitsstellung lösbar verriegelbar ist, und mit einer unter Einnahme einer Betriebsstellung in einer den Betätigungsendabschnitt (47) zumindest partiell abdeckenden Weise außen an der Ventileinheit (2) befestigten oder befestigbaren Zusatz-Betätigungseinheit (3), die ein dem Betätigungsendabschnitt (47) axial vorgelagertes Drückelement (64) aufweist, das drückend betätigbar ist, um durch Übertragung einer Drückkraft die Tastbetätigung des Betätigungsendabschnittes (47) hervorzurufen, **dadurch gekennzeichnet, dass** die Zusatz-Betätigungseinheit (3) einen antriebsmäßig mit dem Drückelement (64) zusammenwirkenden Betätigungsschieber (65) aufweist, der zum Hervorrufen der Drückbetätigung des Drückelementes (64) quer zur Hubrichtung des Betätigungsstößels (37) manuell verschiebbar ist, wobei er wahlweise jeweils stabil in einer das Drückelement (64) nicht betätigenden unwirksamen Stellung oder in einer das Drückelement (64) betätigenden wirksamen Stellung positionierbar ist.

2. Ventileinrichtung nach Anspruch 1, **dadurch gekennzeichnet, dass** das Ventilgehäuse (6) der Ventileinheit (2) einen den Betätigungsendabschnitt (47) des Betätigungsstößels (37) koaxial umschließenden Ringvorsprung (36) aufweist, aus dem der Betätigungsendabschnitt (47) unabhängig von seiner Stellung nicht herausragt und an dem zweckmäßigerweise die Zusatz-Betätigungseinheit (3) befestigt oder befestigbar ist.

3. Ventileinrichtung nach Anspruch 1 oder 2, **dadurch gekennzeichnet, dass** die Zusatz-Betätigungseinheit (3) einen das Drückelement (64) tragenden Grundkörper (67) aufweist, an dem der Betätigungsschieber (65) verschiebbar gelagert ist und über den die Zusatz-Betätigungseinheit (3) an der Ventileinheit (2) befestigt oder befestigbar ist.

4. Ventileinrichtung nach Anspruch 3, **dadurch gekennzeichnet, dass** an der Ventileinheit (2) und am Grundkörper (67) der Zusatz-Betätigungseinheit (3) zueinander komplementäre Rastverbindungsmittel (68a, 68b) zur verrastenden Befestigung der Zusatz-Betätigungseinheit (3) angeordnet sind, wobei die Rastverbindungsmittel (68a, 68b) zur lösbaren oder unlösbaren Rastbefestigung ausgebildet sein können.

5. Ventileinrichtung nach Anspruch 3 oder 4, **dadurch gekennzeichnet, dass** das Drückelement (64) an dem Grundkörper (67) federnd aufgehängt ist.

6. Ventileinrichtung nach Anspruch 5, **dadurch gekennzeichnet, dass** das Drückelement (64) an einem sich quer zur Hubrichtung des Betätigungsstößels (37) erstreckenden, federelastisch auslenkbaren Tragarm (73) der Zusatz-Betätigungseinheit (3) angeordnet ist.

7. Ventileinrichtung nach Anspruch 6, **dadurch gekennzeichnet, dass** das Drückelement (64), der Tragarm (73) und der Grundkörper (67) in einer einstückigen Grundeinheit (72) der Zusatz-Betätigungseinheit (3) zusammengefasst sind.

8. Ventileinrichtung nach einem der Ansprüche 1 bis 7, **dadurch gekennzeichnet, dass** der Betätigungsschieber (37) in der unwirksamen Stellung von dem Drückelement (64) abgehoben ist.

9. Ventileinrichtung nach einem der Ansprüche 1 bis 8, **dadurch gekennzeichnet, dass** der Betätigungsschieber (37) und das Drückelement (64) über eine Schrägflächenanordnung (79) antriebsmäßig zusammenwirken, die über an den beiden Komponenten (65, 64) ausgebildete Schrägflächen (79a, 79b) verfügen, die beim Verschieben des Betätigungsschiebers (65) unter gleichzeitiger Betätigung des Drückelementes (64) aneinander abgleiten.

10. Ventileinrichtung nach Anspruch 9, **dadurch gekennzeichnet, dass** das Drückelement (64) einen dem Betätigungsschieber (65) zugewandten Abstützvorsprung (83) aufweist, der von einer an dem Betätigungsschieber (65) im Anschluss an eine Schrägfläche (79b) ausgebildeten, sich rechtwinkelig zur Hubrichtung des Betätigungsstößels (37) erstreckenden Abstützfläche (84) übergriffen wird, wenn der Betätigungsschieber (65) seine wirksame Stellung einnimmt.

11. Ventileinrichtung nach einem der Ansprüche 1 bis 10, **dadurch gekennzeichnet, dass** der Betätigungsschieber (65) durch lösbar miteinander verrastbare Sicherungsmittel (85) in der wirksamen Stellung lösbar fixierbar ist.

12. Ventileinrichtung nach einem der Ansprüche 1 bis 11, **dadurch gekennzeichnet, dass** der Betätigungsendabschnitt (47) des Betätigungsstößels (37) stirnseitig eine als Längsschlitz ausgebildete Eingriffsvertiefung (62) aufweist, die im nicht an der Ventileinheit (2) montierten Zustand der Zusatz-Betätigungseinheit (3) nutzbar ist, um mittels eines einsteckbaren Betätigungswerkzeuges manuell die eine Verriegelung der Arbeitsstellung des Betätigungsstößels (37) bewirkende Drehbetätigung des Betätigungsendabschnittes (47) hervorzurufen.

13. Ventileinrichtung nach Anspruch 12, **dadurch gekennzeichnet, dass** an dem Drückelement (64) der Zusatz-Betätigungseinheit (3), an der dem Betätigungsendabschnitt (47) des Betätigungsstößels (37) zugewandten Seite, ein Sicherheitsvorsprung (86) angeordnet ist, der so gestaltet ist, dass er nur in der bei unverriegeltem Betätigungsstößel (37) eingenommenen Drehposition des Betätigungsendabschnittes (47) in die Eingriffsvertiefung (62) eingreifen kann, wobei die Zusatz-Betätigungseinheit (3) nur an der Ventileinheit (2) fixierbar ist, wenn der Sicherheitsvorsprung (86) in die Eingriffsvertiefung (62) eingreift.

14. Ventileinrichtung nach Anspruch 13, **dadurch gekennzeichnet, dass** der Sicherheitsvorsprung (86) einen länglichen Querschnitt hat, wobei die Länge seines Querschnittes größer ist als die Breite der Eingriffsvertiefung (62) und die Breite seines Querschnittes geringer ist als die Breite der Eingriffsvertiefung (62).

15. Ventileinrichtung nach einem der Ansprüche 1 bis 14, **dadurch gekennzeichnet, dass** die Ventileinheit (2) von elektro-fluidisch vorgesteuerter Bauart ist und über ein Hauptventil (4) mit einem Hauptventilglied (7) und mindestens ein zur fluidischen Betätigung des Hauptventilgliedes (7) dienendes, elektrisch betätigbares Vorsteuerventil (5) verfügt, wobei das Vorsteuerventil (5) ein die Fluidbeaufschlagung des Hauptventilgliedes (7) steuerndes Vorsteuerventilglied (16) aufweist, dem die Handhilfsbetätigungseinrichtung (10) zugeordnet ist.

## Claims

1. Valve device, comprising an electrically actuated valve unit (2) having a valve housing (6), which valve unit (2) is, for manual actuation, fitted with an auxiliary manual actuating device (10), which comprises an actuating plunger (37), which is movably located in the valve housing (6) and provided with an actuating end section (47) accessible from outside the valve housing (6) and which is, on the one hand, movable in a linear motion within a touch operation between a non-actuated basic position and an actuated working position by applying a touch pressure to the actuating end section (47) within a stroking motion (43) and, on the other hand, releasably lockable in the working position within a rotary operation by turning the actuating end section (47), and further comprising an auxiliary actuating unit (3), which is or can be secured to the outside of the valve unit (2) while at least partially covering the actuating end section (47) when adopting a working position, and which comprises a pressing element (64), which is located axially in front of the actuating end section (47) and can be operated by pressing in order to induce the touch operation of the actuating end section (47) by transmitting a pressing force, **characterised in that** the auxiliary actuating unit (3) comprises an actuating slide (65), which acts together with the pressing element (64) for drive purposes and which is movable manually at right angles to the stroking direction of the actuating plunger (37) to induce the pressing operation of the pressing element (64), being capable of being optionally positioned in a stable manner either in an inoperative position in which the pressing element (64) is not operated or in an active position operating the pressing element (64).

2. Valve device according to claim 1, **characterised in that** the valve housing (6) of the valve unit (2) has an annular projection (36), which coaxially encloses the actuating end section (47) of the actuating plunger (37), and from which the actuating end section (47) does not project irrespective of its position, and to which the auxiliary actuating unit (3) expediently is or can be secured.

3. Valve device according to claim 1 or 2, **characterised in that** the auxiliary actuating unit (3) has a base body (67), which supports the pressing element (64) and on which the actuating slide (65) is movably mounted and by way of which the auxiliary actuating unit (3) is or can be secured to the valve unit (2).

4. Valve device according to claim 3, **characterised in that** mutually complementary latching connecting means (68a, 68b) for latching the auxiliary actuating unit (3) are provided on the valve unit (2) and on the base body (67) of the auxiliary actuating unit (3), which latching connecting means (68a, 68b) can be designed for releasable or non-releasable latching.

5. Valve device according to claim 3 or 4, **characterised in that** the pressing element (64) is resiliently suspended from the base body (67).

6. Valve device according to claim 5, **characterised in that** the pressing element (64) is located on a spring-elastically deflectable supporting arm (73) of the auxiliary actuating unit (3), which supporting arm (73) extends at right angles to the stroking direction of the actuating plunger (37).

7. Valve device according to claim 6, **characterised in that** the pressing element (64), the supporting arm (73) and the base body (67) are combined in a single-piece base unit (72) of the auxiliary actuating unit (3).

8. Valve device according to any of claims 1 to 7, **characterised in that** the actuating slide (37) is lifted off the pressing element (64) in the inoperative position.

9. Valve device according to any of claims 1 to 8, **characterised in that** the actuating slide (37) and the pressing element (64) act together for drive purposes via an inclined surface arrangement (79), with inclined surfaces (79a, 79b), which slide on one another while simultaneously operating the pressing element (64) when the actuating slide (65) is displaced, formed on the two components (65, 64).

10. Valve device according to claim 9, **characterised in that** the pressing element (64) comprises a supporting projection (83), which faces the actuating slide (37) and is overlapped by a supporting surface (84) formed on the actuating slide (65) adjacent to an inclined surface (79b) while extending at right angles to the stroking direction of the actuating plunger (37) when the actuating slide (65) adopts its operative position.

11. Valve device according to any of claims 1 to 10, **characterised in that** the actuating slide (65) can be releasably fixed in the operative position by releasably latchable securing means (85).

12. Valve device according to any of claims 1 to 11, **characterised in that** the actuating end section (47) of the actuating plunger (37) has in its end face an engagement recess (62) designed as a longitudinal slot, which can be used, if the auxiliary actuating unit (3) is not mounted on the valve unit (2), in order to induce the rotary operation of the actuating end section (47) for locking the working position of the actuating plunger (37) manually by means of an insertable operating tool.

13. Valve device according to claim 12, **characterised in that** a safety projection (86) is located on the pressing element (64) of the auxiliary actuating unit (3) on the side facing the actuating end section (47) of the actuating plunger (37), which safety projection (86) is designed such that it can engage with the engagement recess (62) only in the rotary position of the actuating end section (47) adopted in the unlocked state of the actuating end section (47), wherein the auxiliary actuating unit (3) can only be secured to the valve unit (2) when the safety projection (86) is in engagement with the engagement recess (62).

14. Valve device according to claim 13, **characterised in that** the safety projection (86) has an oblong cross-section, the length of its cross-section being greater than the width of the engagement recess (62) and the width of its cross-section being less than the width of the engagement recess (62).

15. Valve device according to any of claims 1 to 14, **characterised in that** the valve unit (2) is of an electro-fluidically pilot-controlled design and comprises a main valve (4) with a main valve member (7) and at least one electrically actuated pilot valve (5) for the fluidic actuation of the main valve member (7), the pilot valve (5) comprising a pilot valve member (16), which controls the application of fluid to the main valve member (7) and to which the auxiliary manual actuating device (10) is assigned.

## Revendications

1. Dispositif de soupape avec une unité de soupape (2) actionnable électriquement, présentant un boîtier de soupape (6), qui est équipée pour l'actionnement manuel d'un dispositif d'actionnement auxiliaire manuel (10) présentant un poussoir d'actionnement (37) qui est agencé de manière mobile dans le boîtier de soupape (6), qui dispose d'une section d'extrémité d'actionnement (47) accessible de l'extérieur du boîtier de soupape (6) et qui peut être déplacé linéairement d'une part dans le cadre d'un actionnement par touche par sollicitation de touche de la section d'extrémité d'actionnement (47) dans le cadre d'un mouvement de levage (43) entre une position de base non actionnée et une position de travail actionnée et peut être verrouillé d'autre part de manière détachable dans le cadre d'un actionnement rotatif par rotation de la section d'extrémité d'actionnement (47) dans la position de travail, et avec une unité d'actionnement supplémentaire (3) fixée ou pouvant être fixée en occupant une position de fonctionnement de manière à recouvrir au moins partiellement la section d'extrémité d'actionnement (47) à l'extérieur sur l'unité de soupape (2), laquelle unité présente un élément de pression (64) qui est logé axialement en amont de la section d'extrémité d'actionnement (47) et qui peut être actionné par pression afin de susciter l'actionnement par touche de la section d'extrémité d'actionnement (47) par transmission d'une force de pression, **caractérisé en ce que** l'unité d'actionnement supplémentaire (3) présente un poussoir d'actionnement (65) coagissant en entraînement avec l'élément de pression (64), lequel poussoir est mobile manuellement pour susciter l'actionnement de pression de l'élément de pression (64) transversalement au sens de levage du poussoir d'actionnement (37), le poussoir pouvant être positionné au choix respectivement de manière stable dans une position inactive n'actionnant pas l'élément de pression (64) ou dans une position active actionnant l'élément de pression (64).

2. Dispositif de soupape selon la revendication 1, **caractérisé en ce que** le boîtier de soupape (6) de l'unité de soupape (2) présente une saillie annulaire (36) entourant coaxialement la section d'extrémité d'actionnement (47) du poussoir d'actionnement (37), de laquelle la section d'extrémité d'actionnement (47) ne dépasse pas indépendamment de sa position et sur laquelle l'unité d'actionnement supplémentaire (3) est ou peut être fixée de manière appropriée.

3. Dispositif de soupape selon la revendication 1 ou 2, **caractérisé en ce que** l'unité d'actionnement supplémentaire (3) présente un corps de base (67) portant l'élément de pression (64), sur lequel le poussoir d'actionnement (65) est logé de manière mobile et par lequel l'unité d'actionnement supplémentaire (3) est ou peut être fixée sur l'unité de soupape (2).

4. Dispositif de soupape selon la revendication 3, **caractérisé en ce que** des moyens de liaison par encliquetage (68a, 68b) complémentaires l'un à l'autre sont agencés sur l'unité de soupape (2) et sur le corps de base (67) de l'unité d'actionnement supplémentaire (3) pour la fixation par encliquetage de l'unité d'actionnement supplémentaire (3), les moyens de liaison par encliquetage (68a, 68b) pouvant être réalisés pour la fixation par encliquetage détachable ou non détachable.

5. Dispositif de soupape selon la revendication 3 ou 4, **caractérisé en ce que** l'élément de pression (64) est suspendu de manière élastique sur le corps de base (67).

6. Dispositif de soupape selon la revendication 5, **caractérisé en ce que** l'élément de pression (64) est agencé sur un bras porteur (73) pouvant être dévié avec l'élasticité d'un ressort, s'étendant transversalement au sens de levage du poussoir d'actionnement (37) de l'unité d'actionnement supplémentaire (3).

7. Dispositif de soupape selon la revendication 6, **caractérisé en ce que** l'élément de pression (64), le bras porteur (73) et le corps de base (67) sont réunis dans une unité de base en une seule pièce (72) de l'unité d'actionnement supplémentaire (3).

8. Dispositif de soupape selon l'une quelconque des revendications 1 à 7, **caractérisé en ce que** le poussoir d'actionnement (37) est relevé de l'élément de pression (64) dans la position inactive.

9. Dispositif de soupape selon l'une quelconque des revendications 1 à 8, **caractérisé en ce que** le poussoir d'actionnement (37) et l'élément de pression (64) coagissent en entraînement par un agencement de surfaces obliques (79) qui disposent de surfaces obliques (79a, 79b) réalisées sur les deux composants (65, 64) et glissant l'une sur l'autre lors du déplacement du poussoir d'actionnement (65) en actionnant simultanément l'élément de pression (64).

10. Dispositif de soupape selon la revendication 9, **caractérisé en ce que** l'élément de pression (64) présente une saillie d'appui (83) tournée vers le poussoir d'actionnement (65) qui est recouverte par une surface d'appui (84) réalisée sur le poussoir d'actionnement (65) à la suite d'une surface oblique (79b), s'étendant à angle droit par rapport au sens de levage du poussoir d'actionnement (37) lorsque le poussoir d'actionnement (65) occupe sa position active.

11. Dispositif de soupape selon l'une quelconque des revendications 1 à 10, **caractérisé en ce que** le poussoir d'actionnement (65) peut être fixé de manière détachable dans la position active par des moyens de fixation (85) pouvant être encliquetés de manière détachable les uns avec les autres.

12. Dispositif de soupape selon l'une quelconque des revendications 1 à 11, **caractérisé en ce que** la section d'extrémité d'actionnement (47) du poussoir d'actionnement (37) présente côté avant une cavité d'engagement (62) réalisée comme une fente longitudinale, laquelle cavité peut être utilisée à l'état non monté sur l'unité de soupape (2) de l'unité d'actionnement supplémentaire (3) afin de susciter manuellement à l'aide d'un outil d'actionnement enfichable l'actionnement rotatif provoquant un verrouillage de la position de travail du poussoir d'actionnement (37) de la section d'extrémité d'actionnement (47).

13. Dispositif de soupape selon la revendication 12, **caractérisé en ce qu'**une saillie de sécurité (86) est agencée sur l'élément de pression (64) de l'unité d'actionnement supplémentaire (3), sur le côté tourné vers la section d'extrémité d'actionnement (47) du poussoir d'actionnement (37), laquelle saillie est conçue de sorte à pouvoir s'engager uniquement dans la position de rotation occupée en cas de poussoir d'actionnement (37) non verrouillé de la section d'extrémité d'actionnement (47) dans la cavité d'engagement (62), l'unité d'actionnement supplémentaire (3) pouvant être fixée uniquement sur l'unité de soupape (2) lorsque la saillie de sécurité (86) s'engage dans la cavité d'engagement (62).

14. Dispositif de soupape selon la revendication 13, **caractérisé en ce que** la saillie de sécurité (86) présente une section transversale oblongue, la longueur de sa section transversale étant plus grande que la largeur de la cavité d'engagement (62) et la largeur de sa section transversale étant plus petite que la largeur de la cavité d'engagement (62).

15. Dispositif de soupape selon l'une quelconque des revendications 1 à 14, **caractérisé en ce que** l'unité de soupape (2) est de type précommandé par voie électrofluidique et dispose d'une soupape principale (4) avec un organe de soupape principale (7) et d'au moins une soupape de précommande (5) actionnable électriquement, servant à l'actionnement fluidique de l'organe de soupape principale (7), la soupape de précommande (5) présentant un organe de soupape de précommande (16) commandant l'alimentation fluidique de l'organe de soupape principale (7), auquel organe de soupape de précommande le dispositif d'actionnement auxiliaire manuel (10) est associé.
